(19) **Europäisches Patentamt**

**European Patent Office**

**Office européen des brevets**

(11) Veröffentlichungsnummer: **0 048 004**
**B1**

(12) # EUROPÄISCHE PATENTSCHRIFT

(45) Veröffentlichungstag der Patentschrift:
**02.05.85**

(21) Anmeldenummer: **81107204.0**

(22) Anmeldetag: **12.09.81**

(51) Int. Cl.⁴: **F 03 B 17/06,** F 03 B 13/06,
F 03 B 7/00

(54) **Vorrichtung zur Nutzung der Energie von fliessendem Wasser in Flüssen.**

(30) Priorität: **16.09.80 DE 3034862**

(43) Veröffentlichungstag der Anmeldung:
**24.03.82 Patentblatt 82/12**

(45) Bekanntmachung des Hinweises auf die Patenterteilung:
**02.05.85 Patentblatt 85/18**

(84) Benannte Vertragsstaaten:
**AT BE CH DE FR GB IT LI NL SE**

(56) Entgegenhaltungen:
**DE - A - 2 730 658**
**DE - A - 2 730 735**
**DE - A - 2 813 141**
**US - A - 4 149 092**

(73) Patentinhaber: **Jöst, Bernhard, Traminerweg 4,**
**D-6800 Mannheim 31 (DE)**

(72) Erfinder: **Jöst, Bernhard, Traminerweg 4,**
**D-6800 Mannheim 31 (DE)**

(74) Vertreter: **Zipse & Habersack, Lessingstrasse 12,**
**D-7570 Baden-Baden (DE)**

## Beschreibung

Die Erfindung betrifft eine Vorrichtung zur Nutzung der Energie von fliessendem Wasser in Flüssen, bestehend aus mehreren nebeneinander und hintereinander, zwischen verankerten Pontons angeordneten Wasserrädern, die über Kolbenpumpen Turbinen von Generatoren antreiben.

In der DE-A-2 730 735 ist ein schwimmendes Wasserkraftwerk zur Stromerzeugung durch Nutzung der Laufwasserenergie in Flüssen beschrieben, welches aus mindestens drei Schwimmkörpern besteht, die mittels Verbindungsrohre und Laufräder über Anschlusswellen verbunden sind und zur Stromerzeugung im Flussbett mittels Ankerseile durch Ankerösen verankert werden. Die wasserdichten Schwimmkörper weisen eingebaute Kolbenpumpen auf, welche von den Laufwasserrädern angetrieben werden.

Um grössere Energiemengen zu erzeugen, wurde auch schon vorgeschlagen, mehrere Schwimmkörper mit Laufwasserrädern hintereinander anzuordnen. Bei mehreren hintereinander angeordneten Wasserrädern erhält aber durch die seitliche Begrenzung der Schwimmkörper nur das vorderste Rad die volle Wasserkraft. Dieses bremst bei Belastung den Wasserstrom ab, so dass das folgende Wasserrad nicht mehr genug Strömung der Wassermasse erhält. Ausserdem sucht sich die abgebremste Strömung einen Weg um die Schwimmkörper herum und geht so für den Antrieb verloren. Dies wirkt sich vor allem dann sehr nachteilig aus, wenn die Anordnung, um den Schiffsverkehr auf den Flüssen nicht zu beeinträchtigen, im Uferbereich eines Flusses aufgestellt ist.

Der Erfindung liegt demgemäss die Aufgabe zugrunde, zur Erhöhung des Wirkungsgrades im Uferbereich von Flüssen auch bei niedrigem Wasserstand eine Kanalisierung der Strömung zu vermeiden, so dass eine Vielzahl von hintereinanderliegenden Wasserrädern angetrieben werden kann.

Die gestellte Aufgabe wird bei einer Vorrichtung der eingangs genannten Art dadurch gelöst, dass die Tragpontons so geformt und mit so grossem Abstand hintereinander angeordnet sind, dass zwischen den Pontons Querkanäle entstehen, derart, dass der Wasseraustausch von den Seiten zur Mitte der Pontonreihe möglichst wenig behindert wird, wobei die Seitenpontons über Verbindungsschienen miteinander und mit den Zwischenpontons verbunden sind, und dass die hintereinander liegenden Wasserräder Kurbelwellen aufweisen, die durch Pleuelstangen miteinander verbunden sind, die doppelt wirkende Kolbenpumpen mit besonders grossem Hub als Langsamläufer antreiben.

Die Vorrichtung gemäss der Erfindung weist mehrere Vorteile auf, die darin bestehen, dass durch die besondere Anordnung der Pontons in Verbindung mit den Wasserrädern das Ausweichen des Wassers verhindert wird und das hinter jedem Wasserrad entstehende Vakuum möglichst rasch ausgefüllt wird. Dadurch wird die Strömung erhalten und jeweils seitlich neues Strömungsmedium zugeführt, das auf die Wasserräder einwirken kann. Die Wasserräder hängen also möglichst frei in der Strömung. Durch die besondere Ausbildung der Tragpontons zwischen den Wasserrädern und dem vorgesehenen Abstand in Längsrichtung kann also die Aussenströmung auch den inneren Teil der gesamten Vorrichtung durchfluten.

Hinzu kommt noch, dass sich aus der mechanischen Zusammenschaltung mehrerer kleiner Wasserräder beim Anmeldungsgegenstand, die dann gemeinsam auf eine doppelt wirkende Kolbenpumpe einwirken, gegenüber dem Wasserkraftwerk gemäss der DE-A-2 730 735 eine zusätzliche Wirkungsgradverbesserung ergibt.

Vorteilhafte Weiterbildungen der Erfindung sind in den Unteransprüchen beschrieben. So besteht eine Ausführungsmöglichkeit darin, dass durch entsprechende Formung der Tragpontons die Wasserströmung von den Seiten zur Mitte hin geleitet wird.

Weiterhin können zwischen Wasserrädern und Pumpen elektrische Kupplungen angeordnet sein, um die Energieübertragung zu steuern.

Um die Wasserräder aus dem strömenden Wasser zu heben, können bei einer weiteren Ausführungsform an jeder Wasserradgruppe Vorrichtungen zum Anheben der Wasserräder vorgesehen sein.

Die Druckleitungen von den einzelnen Pumpen können über Verbindungshochdruckschläuche über eine Sammelleitung zu einer an der Böschung angeordneten Turbine führen.

Ferner können die Druckleitungen zu einer oder mehreren, an den Pontons liegenden, starren Sammelleitung/en führen, die mit der Turbine in Verbindung steht/stehen.

Die Pontons können auch zur Aufrechterhaltung eines Verkehrs mit einer durchgehenden Decke und Brücken mit Brückengelenken zum Begehen und Befahren mit kleineren Fahrzeugen versehen sein.

Schliesslich kann eine Vielzahl von Pontonbaueinheiten als begehbare, künstliche Uferanlage zur Verankerung längs der Fussufer ausgebildet sein.

Es ist auch möglich, alle Einheiten, wie Tragpontons, Wasserräder, Kurbelwellen, doppelt wirkende Kolbenpumpen, Druckleitungen u. dgl. nach einem Baukastensystem herzustellen und entsprechend der gewünschten Anordnung beliebig miteinander zu kombinieren.

Die erfindungsgemässe Vorrichtung weist den Vorteil auf, dass sie eine Energiegewinnung ohne Umweltbelastung ermöglicht, wobei die Ufergestaltung an Flüssen verbessert und ein freundliches Landschaftsbild geschaffen werden kann.

Anahnd der Zeichnungen soll am Beispiel bevorzugter Ausführungsformen die erfindungsgemässe Vorrichtung näher erläutert werden.

In den Zeichnungen zeigen:
Fig. 1 eine Teilansicht der Vorrichtung, vom Ufer aus gesehen,

Fig. 2 eine Schnittansicht der Vorrichtung von Fig. 1,

Fig. 3 eine Vorrichtung, in Stromrichtung gesehen, mit beweglicher Brücke,

Fig. 4 eine Vorrichtung gemäss Fig. 3, jedoch bei Hochwasser,

Fig. 5 eine Teilansicht der Vorrichtung von oben mit einer Brücke für Radfahrer und Fussgänger,

Fig. 6 eine Ansicht entsprechend Fig. 2, jedoch in einer anderen Gruppierung der Einzelelemente,

Fig. 7 die Seitenansicht des Maschinenraumes der Vorrichtung gemäss der Erfindung,

Fig. 8 eine Draufsicht auf den Maschinenraum gemäss Fig. 7,

Fig. 9 einen Lagerbock mit Kurbelscheibe in Seitenansicht,

Fig. 10 einen Lagerbock ohne Kupplung,

Fig. 11 eine Anordnung zum Abheben der Wasserräder mit Achse,

Fig. 12 eine Kurbelwelle mit Klauenkupplung,

Fig. 13 eine Kupplung in Schaltstellung 50 gemäss Fig. 12, (Leerlauf),

Fig. 14 die Kupplung in Schaltstellung 51 gemäss Fig. 12,

Fig. 15 ein Alternativlösung anstelle der Figuren 13 und 14,

Fig. 16 ein Schaufelblatt,

Fig. 17 und Fig. 18 Draufsichten auf Teileinheiten der Vorrichtung gemäss der Erfindung,

Fig. 19 die Anordnung der Vorrichtung an einem Flussufer,

Fig. 20 einen Teil von Fig. 8,

Fig. 21 ein Sammelrohr, von der Seite gesehen, im Schnitt,

Fig. 22 ein Umleitgitter an den Pontons,

Fig. 23 ein Umleitgitter gemäss Fig. 22, von der Flussmitte aus gesehen,

Fig. 24 im Prinzip die erfindungsgemässe Vorrichtung zur Stromerzeugung.

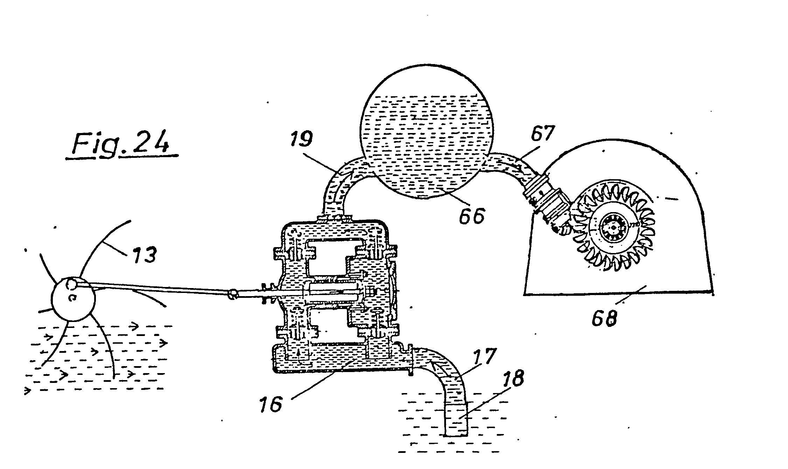

Unter Bezugnahme auf Fig. 24 wird die Vorrichtung gemäss der Erfindung im Prinzip erläutert.

Die Vorrichtung besteht aus einem Wasserrad 13, einer Pumpe 16, einem Saugrohr 17, das mit einem Saugrohrkorb 18 verbunden ist. Die Druckleitung 19 führt von der Pumpe 16 zum Druckkessel 66, der über ein Druckrohr 67 mit dem Turbogenerator 68 verbunden ist.

Das verhältnismässig langsam laufende Wasserrad 13 treibt die als Doppel wirkende Kolbenpumpe ausgebildete Pumpe 16 an, deren Hub- und Drehzahl derjenigen des Wasserrades entspricht. Die Pumpe drückt das Wasser über den Druckkessel mit höchstem Druck zum Turbogenerator, so dass entsprechend sehr hohe Fallhöhen erreichbar sind.

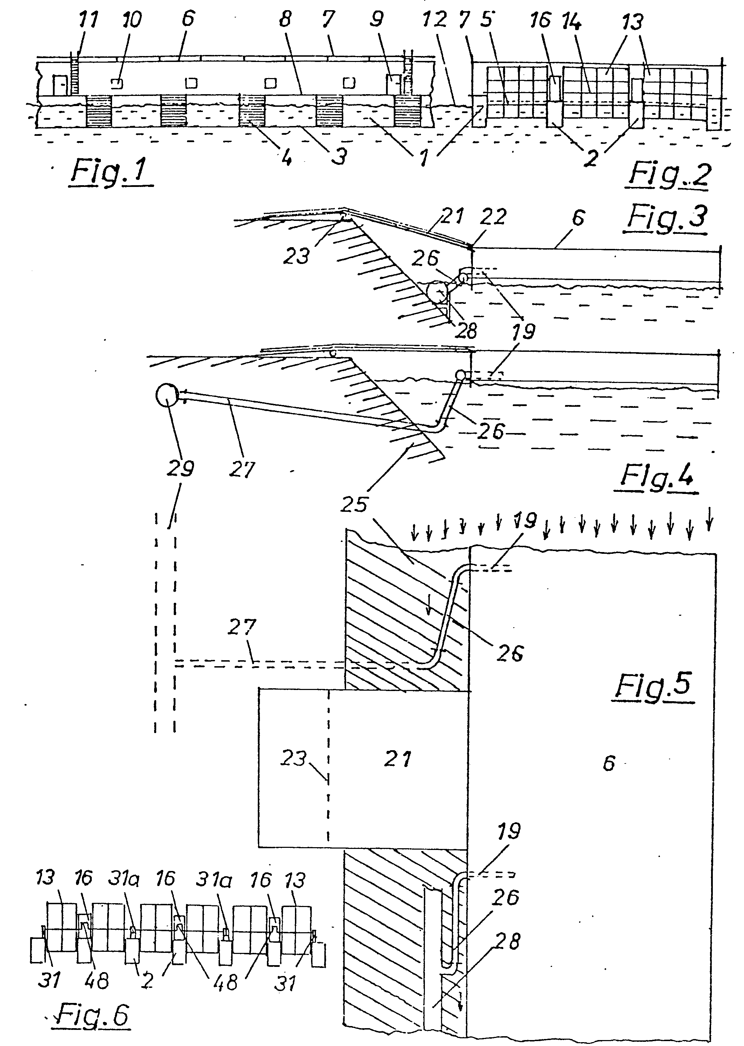

In der in Fig. 1 dargestellten Teilansicht der Anlage sind mit 1 Seitenpontons bezeichnet, die mit einer Verbindungsschiene 3 verbunden sind, wobei ein Wassereinlassgitter 4 vorgesehen ist. Mit 6 ist die Decke des Maschinenraumes bezeichnet, die von einem Geländer 7 begrenzt wird, wobei ein Boden 5 den Maschinenraum nach unten abgrenzt und eine Tür 9 zum Aussenlaufbord 8 und einer Leiter 11 führt. Der Wasserspiegel ist mit 12 bezeichnet.

Fig. 2 zeigt die Vorrichtung von Fig. 1, in Stromrichtung gesehen, im Schnitt, wobei die Wasserräder 13 nebeneinander liegen und 2 die Innenpontons und 5 den Boden des Maschinenraumes darstellen. Die Achse 14 der Wasserräder 13 ist in geeigneter Weise zur Pumpe 16 angeordnet.

In Fig. 3 ist die bewegliche Brücke mit Geländer zur Decke 6 des Maschinenraumes dargestellt, wobei der Drehpunkt der Brücke bei 22 liegt und das Brückengelenk 23 auf Rollen verläuft. Der Teil der Druckluftleitung 19 führt über einen Verbindungshochdruckschlauch an eine Sammelleitung 28 zur Turbine an die Böschung.

In Fig. 4 ist die gleiche Anordnung bei Hochwasser dargestellt. Ausserdem ist hier alternativ die Sammelleitung zur Turbine landeinwärts vorgesehen. Hierzu ist ein Verbindungsrohr 27 zur Sammelleitung 29 angeordnet, das durch die Böschung 25 verläuft.

Fig. 5 zeigt eine Draufsicht der Anordnung gemäss den Figuren 3 und 4, wobei die Brücke 21 mit der Decke 6 des Maschinenraumes sichtbar wird.

Während bei Fig. 2 die Achsen 14 der Wasserräder 13 durchgehend miteinander verbunden sind, ist wegen der unterschiedlichen Strömung zwischen den inneren und äusseren Wasserrädern eine andere Gruppierung zweckmässig, damit sich die schneller laufenden Wasserräder nicht durch die langsam laufenden Wasserräder bremsen lassen.

Fig. 6 zeigt eine der vielen Gruppierungsmöglichkeiten. Hier arbeiten nur vier Wasserräder auf eine Pumpe, wobei die Wasserräder 13 zwischen den Innenpontons 2 mit dem entsprechenden Abstand zu den Pumpen 16 zwischen den Aussenlagern 31 und den getrennten Doppellagern 31a angeordnet sind. Hierbei sind mit 48 die Kurbelwellen bezeichnet.

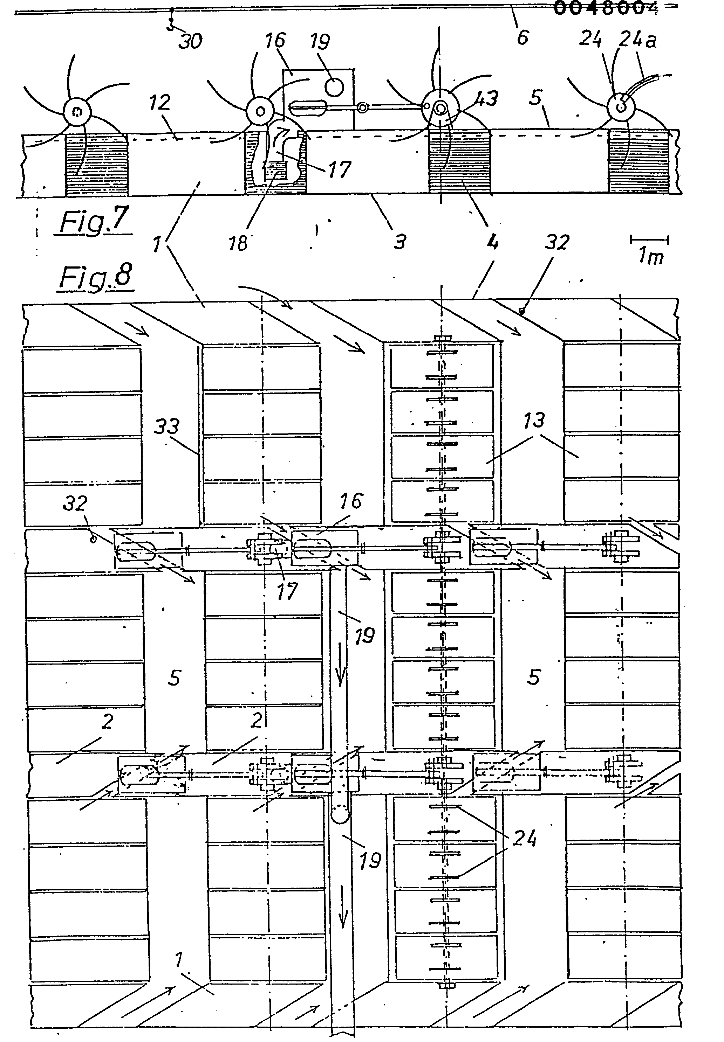

Die in den Figuren 7 und 8 bezeichneten Seitenansichten und Draufsichten des Maschinenraumes zeigen die Aussenpontons 1, die Verbindungsschiene 3 für Pontons udn Wassereinlassgitter, den Boden 5 des Maschinenraumes, die Decke 6, Laufschienen für einen Aufzug, wobei die doppelt wirkende Pumpe 16 über mit einem Saugkorb versehene Ansaugstutzen 17 mit einer abgehenden Druckleitung 19 verbunden sind. An der Achse sind Scheiben zur Aufnahme von U-Schienen für den Radschaufeleinschub vorgesehen. Mit 24a ist eine U-Schiene, mit 30 ein elektrischer Aufzug, mit 43 ein Lagerbock bezeichnet. Ein Schutzgeländer 33 ist ferner bei allen beweglichen Teilen vorgesehen.

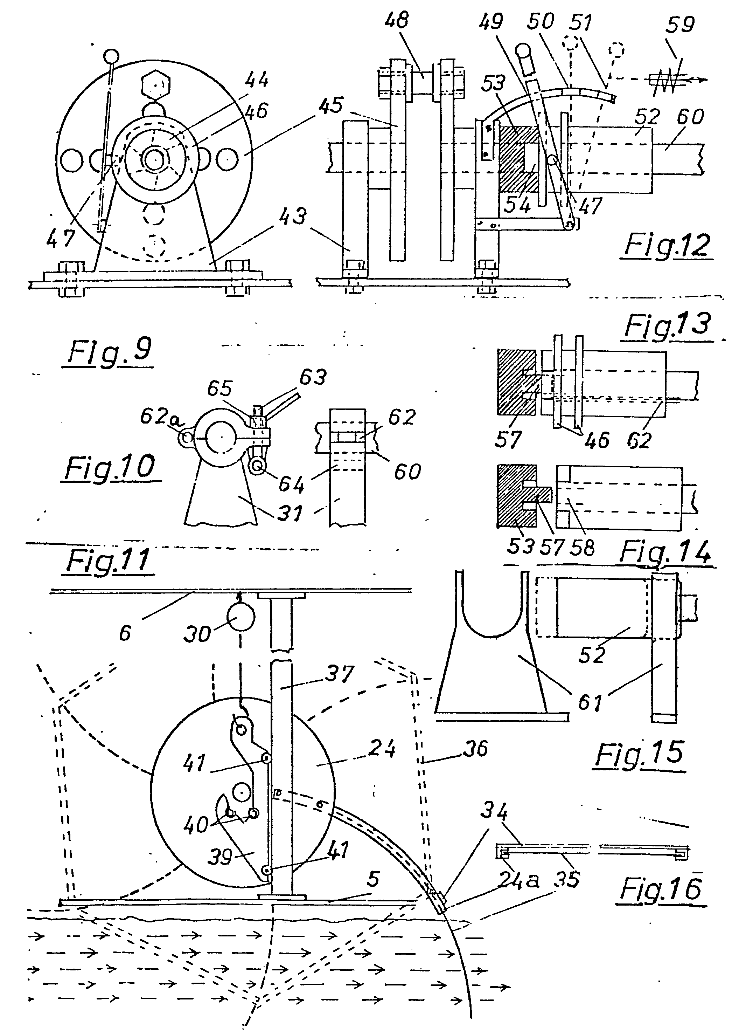

In Fig. 9 ist ein Lagerbock 43 mit einer Kurbelscheibe 45 (Kurbelwange) mit mehreren Bohrungen in verschiedenen Abständen zur Kurbelachse vorgesehen. Durch Versetzen des Kurbelzapfens 48 in eine innere oder äussere Bohrung kann der günstigste Kolbenhub der Pumpen ermittelt werden. Bei konstanten Verhältnissen können dann entsprechend normale Kolbenpumpen verwendet werden. Der Lagerbock 43 weist ferner eine Klauenkupplung 44, Scheiben 46 für den Kupp-

lungsschub und eine Rolle 47 am Schalthebel zwischen den beiden Scheiben auf.

In Fig. 10 ist der Lagerbock 31 ohne Kupplung für die Aussenenden der Wasserradachsen dargestellt. Zur schnelleren Montage und Demontage sind Lagerdeckel mit Scharnieren 62a und einem als Schnellverschluss wirkenden Schwenkbolzen 63 mit Gelenk 64 und einer Mutter 65 vorgesehen. Mit 60 ist die Wasserradachse bezeichnet.

Fig. 11 zeigt eine Vorrichtung zum Abheben der Wasserräder mit der Achse aus dem strömenden Wasser. Die Deckenstützen 37 werden zweckmässigerweise so angebracht, dass sie als Gegenlager für diese Vorrichtung dienen. Mit einem Elektrozug 30, einem Haken 39 mit Rollen 40 wird die rotierende Achse des Wasserrades aufgenommen. Die Rollen 41 dienen zum Abfangen des Wasserdruckes auf die Wasserradachse. Die Scheibe 24 dient zur Befestigung der U-Schienen 24a, wobei Streben 34 hinter den Schaufelblättern 35 und Verstrebungen 36 zwischen den U-Schienen angeordnet sind.

Die in Fig. 12 dargestellte Kurbelwelle mit Klauenkupplung weist den Lagerbock 43, eine Kurbelwange 45, eine Rolle 47 am Schalthebel, Kurbelzapfen 48, Raster 49 für den Schalthebel in Arbeitsstellung auf. Im Leerlauf (Stellung 50) ist die Pumpe ausgekuppelt. Die Rasterstellung 51 dient zum unbehinderten Abnehmen oder Einsetzen der Wasserradachse, wobei der Teil 52 auf einem Keil der Klauenkupplung gleitet, wobei der Teil 53 der Klauenkupplung mit der Kurbelwelle fest verbunden ist und die Klaue 54 des gleitenden Teiles im Eingriff steht. Die Klaue 59 kann auch mit einer Magnet- oder Motorbetätigung ausgerüstet werden.

Fig. 13 zeigt die Kupplung in Schaltstellung 50 (Leerlauf), wobei der Zapfen noch in die Bohrung 58 der Achse 60 eingreift. Mit 46 sind Schubscheiben und mit 62 Nute in der Welle mit Keil dargestellt.

Fig. 14 zeigt die Kupplung in Schaltstellung 51, wobei die Wasserradachse im Schubteil der Klauenkupplung frei zur Demontage ist.

Fig. 15 zeigt eine Alternativlösung der Figuren 13, 14. Anstelle des Führungszapfens tritt ein Zweitlager neben den Lagerbock 43, so dass bereits in der Schaltstellung 50 (Fig. 12) die Kupplungsmuffe mit der Wasserradachse von diesem Zweitlager getragen wird und die Pumpe für Wartungszwecke stillsteht. Der Lagerbock für das Zweitlager ist mit 61 bezeichnet.

Fig. 16 zeigt ein Schaufelblatt 35, das in eine U-Schiene 24a mit einer Strebe 34 hinter dem Schaufelblatt eingeschoben ist. Das Schaufelblatt kann aus Kunststoff oder nichtrostendem Material bestehen.

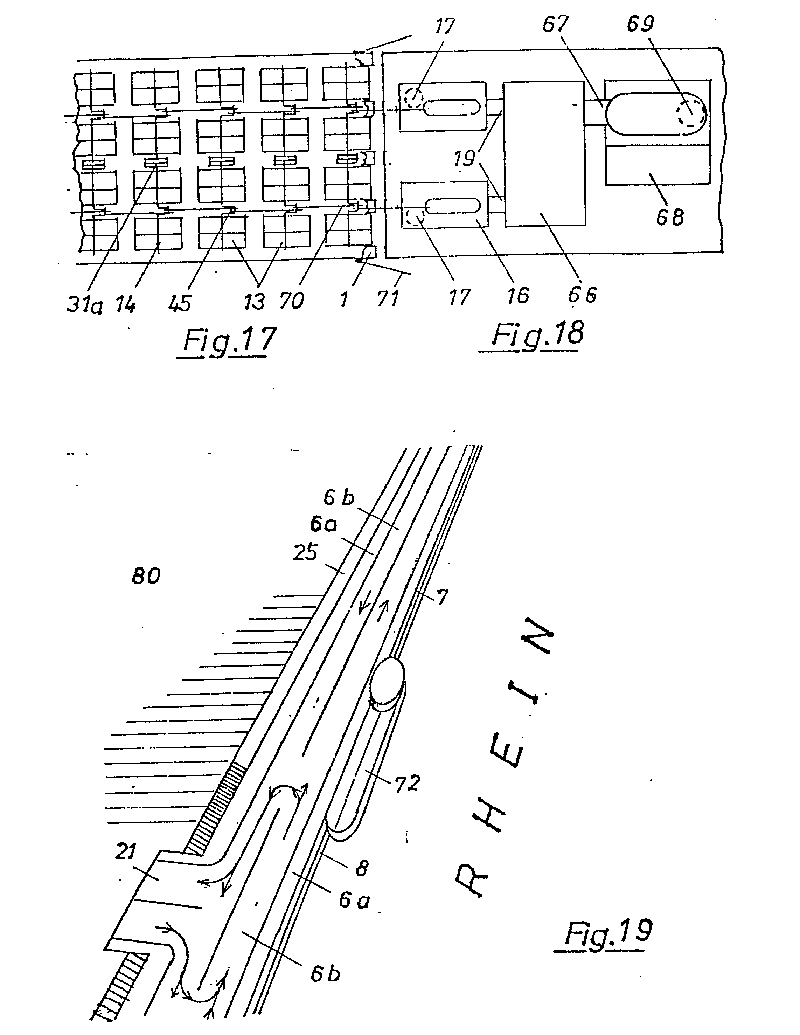

Die Figuren 17 und 18 zeigen Teilansichten der Vorrichtung gemäss der Erfindung, wobei Fig. 17 eine Gruppe von vier Wasserrädern 13 auf einer Kurbelwelle 14 darstellt. Die in Stromrichtung hintereinander in immer gleich starker Strömung liegenden Gruppen sind durch Pleuelstangen 70 miteinander verbunden. Die Versetzung der Pumpen und Rohrleitungen auf die nächste Anschlusseinheit erspart Gewicht, und daher wird die Anzahl der Pontons geringer, wodurch mehr Wasserräder günstiger in der Strömung hängen. Der Verbindungsteil zwischen der Antriebseinheit und der in Fig. 18 dargestellten Einheit ist mit 71 bezeichnet.

Diese Einheit wird durch Pumpen 16 mit Ansaugstutzen 17, den Druckkessel und den Turbogenerator 68 schwer belastet, so dass hierfür Pontons als Träger nicht geeignet sind, wobei geschlossene Schiffskörper verwendet werden können. Auf dieser Einheit befinden sich auch die Druckrohre 19 der Druckkessel 66 und das Verbindungsrohr 67 zum Turbogenerator 68. Mit 69 ist der Turbinenauslauf bezeichnet.

Fig. 19 zeigt die Anordnung an den Ufern eines Flusses, wobei mit 80 das rechte Flussufer bezeichnet ist. Die Decken der Maschinenräume aller Einheiten werden mit einem geeigneten Belag gedeckt und zu einem Fahrrad- und Fussgängerweg 6b beziehungsweise 6a verbunden, welcher durch die Eigenwärme der Maschinen und eine eventuelle zusätzliche Heizung im Winter schnee- und eisfrei bleibt. Der Weg ist durch ein Geländer 7 abgegrenzt. Mit 8 ist der Aussenlaufbord bezeichnet. Die Brücke 21, die sich selbständig dem Wasserlauf anpasst, dient zur Zu- und Abfahrt. Mit 72 ist ein Schiff bezeichnet, das an der Anlage festgemacht hat.

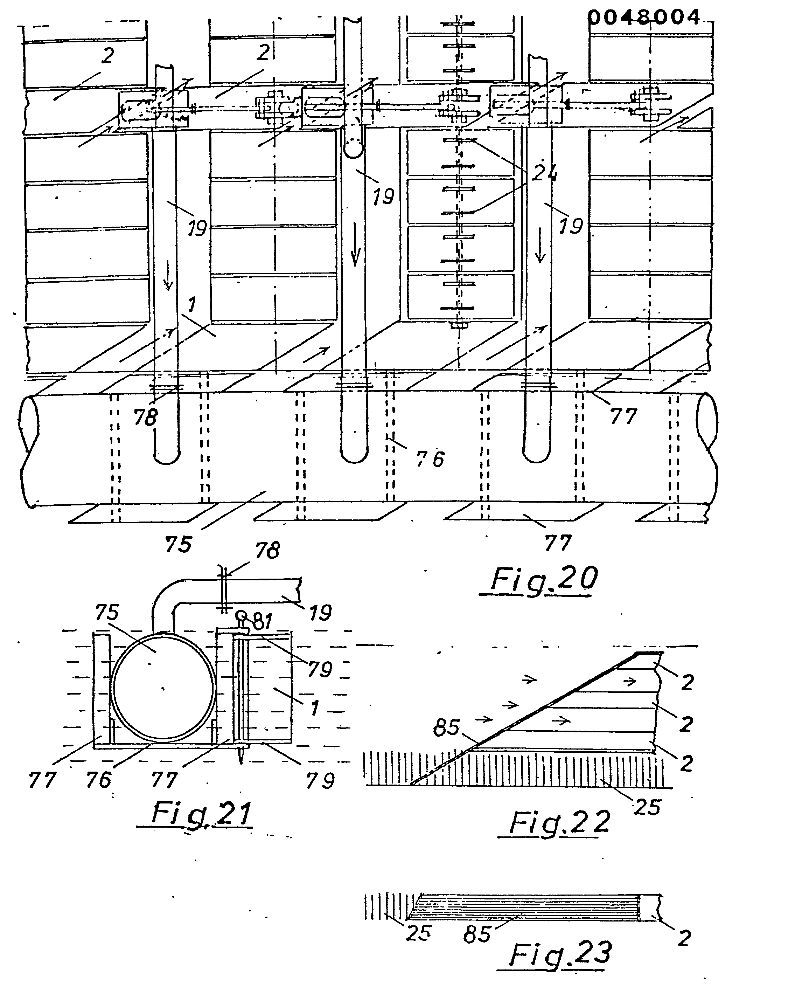

Die Fig. 20 zeigt einen Teil von Fig. 8, der mit einer auf Pontons liegenden Sammelleitung 75 verbunden ist. Die Pontons 77 sind mit Verbindungsteilen 76 verbunden. Mit 78 sind die Flansche der Druckrohre dargestellt. Bei dieser Einheitenkombination können Druck- und Sammelrohre ohne Zwischenschläuche starr miteinander verbunden werden. Auch können mehrere Sammelrohre miteinander verlegt werden, die zweckmässig an der Uferseite angeordnet sind, da hier, der geringeren Strömung wegen, weniger Antriebskraft verlorengeht.

Fig. 21 zeigt eine Sammelleitung beziehungsweise ein Sammelrohr 75, das oder die mit der Druckleitung 19 mit den Verbindungsflanschen 78 verbunden ist/sind. Mit 1 ist ein Aussenponton bezeichnet (Fig. 8), wobei das Verbindungsteil 76 für die Pontons 77 unterhalb des Sammelrohres 75 liegt. An den Pontons sind Laschen 79 mit Bohrungen vorgesehen, die mittels Stangen 81 mit den Laschen der Pontons 77 verbunden werden.

Die in Fig. 22 dargestellten Umleitgitter 85 sind an der Einströmseite jeder Anlage angebracht, um anschwimmende Gegenstände und Treibeis an der Anlage vorbeizuleiten.

In Fig. 23 ist das Umleitgitter gemäss Fig. 22 von der Flussmitte aus dargestellt.

**Patentansprüche**

1. Vorrichtung zur Nutzung der Energie von fliessendem Wasser in Flüssen, bestehend aus mehreren nebeneinander und hintereinander, zwischen verankerten Pontons angeordneten Wasserrädern, die über Kolbenpumpen Turbinen von Generatoren antreiben, dadurch gekennzeichnet, dass die Tragpontons (1, 2) so geformt und mit so grossem Abstand hintereinander angeordnet sind, dass zwischen den Pontons Querkanäle entstehen, derart, dass der Wasseraustausch von den Seiten zur Mitte der Pontonreihe möglichst wenig genhindert wird, wobei die Seitenpontons (1) über Verbindungsschienen (3) miteinander und mit den Zwischenpontons (2) verbunden sind, und dass die hintereinander liegenden Wasserräder Kurbelwellen aufweisen, die durch Pleuelstangen miteinander verbunden sind, die doppelt wirkende Kolbenpumpen mit besonders grossem Hub als Langsamläufer antreiben.

2. Vorrichtung nach Anspruch 1, dadurch gekennzeichnet, dass durch entsprechende Formung der Tragpontons (1, 2) die Wasserströmung von den Seiten zur Mitte hin geleitet wird.

3. Vorrichtung nach Anspruch 1 oder 2, dadurch gekennzeichnet, dass zwischen Wasserrädern und Pumpen elektrische Kupplungen angeordnet sind.

4. Vorrichtung nach einem oder mehreren der vorhergehenden Ansprüche, dadurch gekennzeichnet, dass an jeder Wasserradgruppe Vorrichtungen zum Anheben der Wasserräder aus dem strömenden Wasser angeordnet sind.

5. Vorrichtung nach Anspruch 1, dadurch gekennzeichnet, dass die Druckleitungen (19) von den einzelnen Pumpen über Verbindungs-Hochdruckschläuche (26) über eine Sammelleitung (28) zu einer an der Böschung angeordneten Turbine führen.

6. Vorrichtung nach Anspruch 1, dadurch gekennzeichnet, dass die Druckleitungen (19) der einzelnen Pumpen mit Verbindungsschläuchen (26) über Verbindungsrohre (27) zu einer Sammelleitung (29) für die Turbine führen.

7. Vorrichtung nach Anspruch 1, dadurch gekennzeichnet, dass die Druckleitungen (19) zu einer oder mehreren, an den Pontons liegenden, starren Sammelleitung/en (75) führen, die mit der Turbine in Verbindung steht/stehen.

8. Vorrichtung nach einem oder mehreren der vorhergehenden Ansprüche, dadurch gekennzeichnet, dass die Pontons mit einer durchgehenden Decke (6) und Brücken (21) mit Brückengelenken (23) zum Begehen und Befahren mit kleineren Fahrzeugen versehen sind.

9. Vorrichtung nach einem oder mehreren der vorhergehenden Ansprüche, dadurch gekennzeichnet, dass eine Vielzahl von Pontonbaueinheiten als begehbare, künstliche Uferanlage zur Verankerung längs der Flussufer ausgebildet ist.

10. Vorrichtung nach einem oder mehreren der vorhergehenden Ansprüche, dadurch gekennzeichnet, dass alle Einheiten, wie Tragpontons, Wasserräder, Kurbelwellen, doppelt wirkende Kolbenpumpen, Druckleitungen und dergleichen, nach einem Baukastensystem hergestellt sind und entsprechend der gewünschten Anordnung beliebig kombiniert werden können.

### Claims

1. Arrangement for harnessing the energy of flowing water in rivers, consisting of a plurality of water wheels, arranged in parallel and in series between anchored pontoons, which wheels are driven by reciprocating pump turbines of generators, characterised in that the supporting pontoons (1, 2) are so shaped and are disposed in series at such a distance apart, that transverse channels are created between the pontoons such that the exchange of water from the sides to the middle of the series of pontoons is impeded as little as possible, the lateral pontoons (1) being linked to each other and to the intermediate pontoons (2) via connecting bands (3) and in that the water wheels disposed in series have crankshafts, connected together by connecting rods which drive double-acting reciprocating pumps with a particularly large stroke as slow-speed impellers.

2. Arrangement according to claim 1, characterised in that by appropriate shaping of the supporting pontoons (1, 2), the water flow is led from the sides towards the middle.

3. Arrangement according to claim 1 or 2, characterised in that electric couplings are disposed between water wheels and pumps.

4. Arrangement according to one or more of the preceding claims, characterised in that devices for lifting the water wheels out of the flowing water are disposed on each group of water wheels.

5. Arrangement according to claim 1, characterised in that the pressure lines (10) of the individual pumps lead via connecting high-pressure hoses (26) via a collecting line (28) to a turbine disposed on the bank.

6. Arrangement according to claim 1, characterised in that the pressure lines (19) of the individual pumps with connecting hoses (26) lead via connecting pipes (27) to a collecting line (29) for the turbine.

7. Arrangement according to claim 1, characterised in that the pressure lines (19) lead to one or more rigid collecting lines (75) located on the pontoons, which collecting line(s) is/are connected to the turbine.

8. Arrangement according to one or more of the preceding claims, characterised in that the pontoons are provided with a continuous cover (6) and bridges (21) with bridge links (23) for access and passage of smaller vehicles.

9. Arrangement according to one or more of the preceding claims, characterised in that a multiplicity of pontoon constructional components are in the form of movable, artificial embankment installations for anchoring along the river bank.

10. Arrangement according to one or more of the preceding claims, characterised in that all of the components, such as supporting pontoons, water wheels, crankshafts, double-acting reciprocating pumps, pressure lines and the like, are produced by a system of assembly of prefabricated parts and can be combined as desired according to the desired arrangement.

### Revendications

1. Appareil pour tirer parti de l'énergie de l'eau courante dans des cours d'eau, formé de plusieurs roues hydrauliques disposées côté à côte

et les unes derrière les autres entre des pontons ancrés et qui, par l'intermédiaire de pompes à piston, entraînent des turbines de générateurs, caractérisé en ce que les pontons porteurs (1, 2) sont de forme telle et sont disposés l'un derrière l'autre avec un si grand espacement qu'il se forme entre les pontons des canaux transversaux, de sorte que l'échange d'eau des côtés au milieu de la rangée de pontons est entravé le moins possible, les pontons latéraux (1) étant reliés, par l'intermédiaire de barres de liaison (3), entre eux et aux pontons intermédiaires (2), et que les roues hydrauliques situées les unes derrière les autres présentent des vilebrequins qui sont reliés entre eux par des bielles qui entraînent des pompes à piston à double effet à course particulièrement grande, en tant que rotors lents.

2. Appareil selon la revendication 1, caractérisé en ce que grâce à une forme appropriée donnée aux pontons porteurs (1, 2), l'écoulement d'eau est conduit des côtés vers le milieu.

3. Appareil selon l'une des revendications 1 ou 2, caractérisé en ce qu'entre roues hydrauliques et pompes sont disposés des accouplements électriques.

4. Appareil selon une ou plusieurs des revendications précédentes, caractérisé en ce que sur chaque groupe de roues hydrauliques sont disposés des dispositifs servant à soulever les roues hydrauliques hors de l'eau courante.

5. Appareil selon la revendications 1, caractérisé en ce que les tuyaux de refoulement (19) partant des différentes pompes conduisent, en passant par des tuyaux souples de liaison à haute pression (26) et par un tuyau collecteur (28), à une turbine disposée sur le talus.

6. Appareil selon la revendication 1, caractérisé en ce que les tuyaux de refoulement (19) des différentes pompes conduisent, par des tuyaux souples de liaison (26), en passant par des tubes de liaison (27), à un tuyau collecteur (29) de la turbine.

7. Appareil selon la revendication 1, caractérisé en ce que les tuyaux de refoulement (19) conduisent à un ou plusieurs tuyaux collecteurs rigides (75) situés sur les pontons et qui sont en communication avec la turbine.

8. Appareil selon une ou plusieurs des revendications précédentes, caractérisé en ce que les pontons sont munis d'une plate-forme d'un seul tenant (6) et de ponts (21) avec articulations de pont (23), pour la marche et la circulation avec de petits véhicules.

9. Appareil selon une ou plusieurs des revendications précédentes, caractérisé en ce que de multiples unités de ponton sont constituées sous forme d'installation artificielle de rive, permettant la marche, pour l'ancrage le long de la rive du cours d'eau.

10. Appareil selon une ou plusieurs des revendications précédentes, caractérisé en ce que toutes les unités telles que pontons porteurs, roues hydrauliques, vilebrequins, pompes à piston à double effet, tuyaux de refoulement et unités similaires sont fabriquées selon un système de jeu de construction et peuvent être combinées à volonté conformément à la disposition désirée.

0 048 004

Fig.1

Fig.2

Fig.3

Fig.4

Fig.5

Fig.6

Fig.7

Fig.8

0 048 004

Fig.12

Fig.9

Fig.13

Fig.10

Fig.14

Fig.11

Fig.15

Fig.16

31a  14  45  13  70  1  71

_Fig.17_

17  67  69

19

17  16  66

6 8

_Fig.18_

80

6 b
6a
25

7

21

72

8
6 a

6 b

_Fig.19_

R H E I N

0048004

*Fig. 20*

*Fig. 21*

*Fig. 22*

*Fig. 23*

_Fig. 24_

13

19

67

66

68

16

17

18